# EUROPEAN PATENT APPLICATION

(11) **EP 2 846 299 A1**
(43) Date of publication of application: **11.03.2015**
(21) Application number: 14162939.4
(22) Date of filing: 31.03.2014
(51) Int. Cl.: G06Q 10/10, G06F 3/0488, G06F 3/0484

(54) **Electronic presentation aid**

(30) Priority: 29.03.2013 GB 201305837
(71) Applicant: Mid City Holdings LLC, Austin, TX 78746 (US)
(72) Inventor: Kilgour, Calum, Linlithgow, EH49 7BA (GB)
(74) Representative: Towlson, Samantha Jayne

(57) **Abstract**

An electronic presentation aid comprises for example a programmed tablet computer or electronic whiteboard. Presentation data defines the appearance and positions of presentation elements to be displayed in a presentation layout on a display screen. In a presentation mode, the elements are displayed in the presentation layout, with each element being displayed in either a full visibility state or a reduced visibility state. A user can tap on an element, to change it from the reduced visibility state to the full visibility state. In this way, the user does not need to draw the elements by hand, but they can be made visible and discussed in a sequence determined by user during a presentation, rather than a predetermined sequence. Additional functions can be programmed into elements, for example allowing a user to swap an element for alternative elements at the same location, or to launch a media clip.

## Description

### Field of the Invention

The present invention relates to electronic presentation aids using display screens and user input for displaying information for example in a meeting.

### Background

Presentation aids of various types are widely used to convey information. Such aids are used widely in teaching, sales, business management and other applications. The most common example of an electronic presentation aid is a computer running presentation software such as Microsoft PowerPoint®. Essentially the software generates a "slide show" comprising a sequence of images. The design effort and organisation of the presentation is done in advance, perhaps using one template for many presenters. This allows sophisticated images to be presented rapidly using standard computer hardware. Within the slide show format, however, the presentation is generally constrained to follow a predetermined sequence. This is not a problem where the user is presenting a prepared lecture in a one-to-many situation, but it does not provide for effective communication in a more interactive environment such as a sales meeting or tutorial. Often the most effective communicators avoid the slide show format because of these restrictions. They may be able to sell their company's products/services in a confident and consistent manner using only a pen and a whiteboard, or piece of paper. The flow of presentation and discussion can be much more flexible using these tools, and hence more suitable to an interactive discussion such as in a sales meeting, or tutorial session.

Whiteboard presentation tools are found to be very effective for sales people to acquire the knowledge necessary to perform the selling task effectively, and to deliver that knowledge to potential customers. Various companies therefore use "whiteboarding" techniques to train sales people on key messages about the products and services that the sales person is expected to sell. The inventors have recognised that a high proportion of salespeople, while they enjoy the training approach to learn the key messages about their solutions, do not have the confidence or time in face-to-face meetings to start with a blank sheet of paper or whiteboard and interactively "illustrate" their conversation with the buyer.

### Summary of the Invention

The inventors have sought to provide a novel presentation aid that overcomes at least some of the drawbacks of the known tools and techniques.

The invention in a first aspect provides an electronic presentation aid comprising a processing device programmed:
- to receive presentation data defining the appearance of a plurality of presentation elements, the presentation data further defining positions of said elements such that they may be displayed in a presentation layout on a display screen;
- in a presentation mode to cause display of said plurality of presentation elements in the presentation layout, each element being displayed in either a full visibility state or a reduced visibility state; and
- in said presentation mode to receive user input signals from time to time indicating individual presentation elements within said presentation layout and in response to the user input signals to change the indicated element from the reduced visibility state to the full visibility state, whereby the plurality of elements may be selected and made fully visible in a sequence determined by user during a presentation.

The processing device may be further programmed in said presentation mode to:
- receive in said presentation data information associating one or more alternative presentation elements with one or more of said presentation elements;
- receive a user input signal indicating one of said elements and a change command;
- in response to said change command swapping the element for the alternative element at the same location in the layout.

The processing device may be further programmed in said presentation mode to:
- receive second presentation data defining the appearance of a second plurality of presentation elements, the second presentation data further defining positions of said elements such that they may be displayed in a second presentation layout on the display screen;
- receive in said presentation data information associating said second presentation data with a specific one of said presentation elements;
- receive a user input signal indicating one of said elements and a display or play command;
- in response to said display or play command accessing and presenting to the user the second presentation elements in the second layout, in the same manner as the first presentation.

The processing device may be further programmed in said presentation mode to:
- receive in said presentation data information associating a plurality of alternative presentation elements with one or more of said presentation elements;
- receive a user input signal indicating one of said elements and a change menu command;
- in response to said change menu command displaying the plurality of alternative elements in a menu;
- in response to a user input signal selecting one of the alternative elements from the menu, displaying the selected element in place of the existing one at the same location in the layout.

The processing device may be further programmed in said presentation mode to:
- receive in said presentation data information associating one or more media clips or documents with one or more of said presentation elements;
- receive a user input signal indicating one of said elements and a media play command;
- in response to said media play command playing said media clip or displaying said document, as the case may be.

The processing device may be further programmed in said presentation mode to:
- receive a user input signal indicating one of said elements and an annotation command;
- in response to said annotation command taking from the user annotation data associated with the indicated element;
- storing the annotation data in association with the presentation data.

The processing device or another processing device is further programmed in a reporting mode to:
- receive presentation data relating to a delivered presentation and producing a report including the annotation data taken from the user.

The presentation aid may further comprise a user input device for generating said user input signals.

In some embodiments, said user input device has the function of a touchscreen or interactive whiteboard.

In some embodiments said reduced visibility state a presentation element has the same appearance as in the full visibility state but reduced in one or more of contrast, saturation, line weight, definition. For example, a reduced visibility element may be a grey version of an element that is black or strong in colour, or it may be blurred, or drawn in fine traces or in outline.

The processing device or another processing device may be further programmed in a presentation editing mode to:
- receive a user input signal indicating one of said elements and an edit command;
- edit the presentation data to modify the appearance and/or position of said element in the presentation when displayed.

The processing device or other processing device may be further programmed in said presentation editing mode to:
- to receive template data defining the appearance of a plurality of presentation elements, the presentation data further defining positions of said elements such that they may be displayed in a presentation layout on a display screen;
- in accordance with said edit commands edit the template data to modify the appearance and/or position of said element in the presentation when displayed; and
- to save the modified template data as presentation data for use in the presentation mode of claim 1.

In another aspect the invention provides an electronic presentation aid comprising a touchscreen display and processor programmed to present one or more graphical elements in a presentation layout on a display screen, each element being displayed in either a full visibility state or a reduced visibility state, the processor being responsive to a user's touch action on a reduced visibility element to turn it automatically to the full visibility state.

In one embodiment, said processor is programmed to present a plurality of graphical elements in a presentation layout on a display screen, at least a majority of said elements being initially in said reduced visibility state, the processor being responsive to a user's touch actions to turn those elements to the full visibility state in accordance with a sequence in which they are touched by the user.

The processor may be programmed to swap one of said elements for a predetermined alternative element in response to a further touch action performed on that element by the user.

The invention further provides a computer program product comprising machine readable instructions for causing a processing device to implement the presentation aid of any aspect or embodiment of the invention as set forth above.

### Brief Description of the Drawings

Figure 1 shows in block schematic form the hardware and software architecture of a field terminal and a presentation server forming an embodiment of an electronic presentation aid according to an embodiment of the invention;
Figure 2 shows a main control screen of an example field terminal comprising a touch screen display device;
Figure 3 shows graphical and textual elements forming an example presentation displayed by the field terminal, with all elements in an active state;
Figure 4 shows the example presentation displayed by the field terminal in an initial state where all presentation elements are in an inactive (ghost) state;
Figure 5 shows the example presentation displayed by the field terminal in the initial state, with a modified visibility setting;
Figure 6 illustrates the activation of a succession of presentation elements by touch actions;
Figure 7 illustrates activation of presentation elements out of sequence by touch actions;
Figures 8 and 9 illustrate the swapping of a presentation element by a touch gesture in an editing mode and/or a presentation mode;
Figure 10 illustrates various actions that may be ascribed to presentation elements in the example embodiment;
Figure 11 illustrates the entry of notes during a presentation;
Figures 12 and 13 illustrate the selection of alternative elements in said editing mode or presentation mode; and
Figure 14 illustrates the generation of presentation reports in an embodiment of the invention.

### Description of Exemplary Embodiments

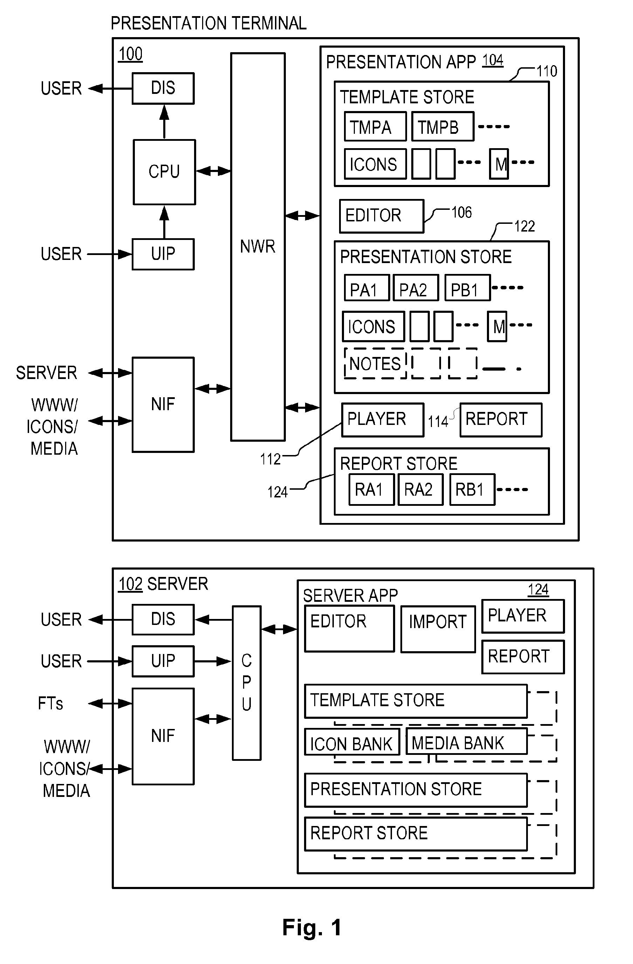

Figure 1 illustrates schematically the main components of a presentation aid and supporting system. A presentation terminal 100 is provided as the primary presentation aid. Terminal 100 comprises computer hardware including a CPU, a display device DIS and user input devices UIP. A network interface NIF connects the CPU to other sources and repositories of information, including in particular a server 102 that forms part of the overall system. The server is particular relevant in institutional and enterprise-type applications, where a team of presenters are to be enabled to deliver effective presentations using these aids in a consistent but flexible manner. These presenters (users of the presentation aid) may for example be sales representatives, teachers or anyone with a need to communicate complex messages in an interactive manner.

For the purposes of the present disclosure, the presentation terminal is controlled by a presentation application (app) 104. As with any computing hardware, some firmware and an operating system will be provided for the app to interact with the hardware, including input/output devices, memory and the like. The app may be downloaded to generic hardware from an "app store". The operating system may for example be a version of Apple iOS, Android, BlackBerry OS or Microsoft Windows. A "native wrapper" module NWR is provided in this example, which interfaces between the operating system that is specific to a particular hardware design o range of designs, and the core that is app 104. The application program may for example be written in Javascript®, the well-known object-oriented programming language. A commercially available library to provide the native wrapper function on portable devices is PhoneGap (available at URL http://phonegap.com). Functions of the presentation app 104 may be implemented using commercially available libraries such as Sencha Touch (http://www.sencha.com) which is adapted specifically to facilitate for touchscreen interaction on mobile devices.

Within presentation app 104 there are various functional modules such as an editor 110, player 112 and report module 114. Numerous other modules for administration of permissions, housekeeping etc.. will be present, but do not need to be described here. Various types of information are also stored within the app or in associated databases. These include a template store 110, a presentation store 122 and a report store 124. Within the template store, various presentation templates TMPA, B etc. are stored. These templates incorporate (either within the template data or by reference) various presentation elements which can be displayed via display DIS in a manner to be described further below. These elements include for example icons and a separate icon bank is shown within the template store. Also shown is a media bank which stores items M etc. of media such as documents, video or audio clips and the like. Icons and media may also be accessed through the network interface NIF, though it is preferred in the present embodiment to have a self-contained set of data for autonomous and reliable operation.

The Editor module 106 allows a user to generate a bespoke presentation for a particular meeting or group of meetings. For example, it might be desired to deliver versions of a presentation A to two different clients 1 and 2. Based on template TMPA, the user can create presentation PA1 for client 1 and presentation PA2 for client two. These presentations are shown within the presentation store 122. A presentation PB1 is also present, based on template TMPB. Within the presentation store, the icons may be present again, or the presentations may use references to the icons and media that exist within the template store. When the user uses the play module 112 to deliver a presentation, notes can be created. In addition to the elements inherited from the template, therefore, the presentation store includes space for notes to be associated with a presentation, and/or with elements within the presentation. Report module 114 can be used to generate reports incorporating a view of the presentation and the notes taken, as will be illustrated further below.

Server app 124 incorporates, in this example implementation, modules and databases having all the same functions and contents as the presentation app (editor, play, report). In addition, the server app manages template and presentation data for many different users, and perhaps different organisations or departments. The storage of these templates and presentations is therefore segregated so that a particular group of users will see only their own material, and other users' materials are kept confidential and hidden (represented by broken outlines within the server app of Figure 1). Each user's templates and presentations can be synchronised between the presentation terminal 100 and server 102. The invention is by no means limited to multi-user or multi-enterprise implementations, however, and could be implemented on a single, stand-alone device.

While certain combinations of programming tools and operating systems have been mentioned as suitable for use in implementing the server application and presentation application, the invention is by no means limited to these examples, and can be implemented with any programmable, interactive display tool. In particular, a presentation may be edited, delivered and reported directly using the server display and user input devices. A presentation may also be edited delivered and reported using a web-based client. In that case, the functions of the field terminal illustrated in Figure 1 are divided between the player app in the form of a web server, and the display and user input devices in the form of a web browser. These are connected via the network interface NIF and internet or local area network, so that the user and colleagues need not be at the same location as the player application and presentation data.

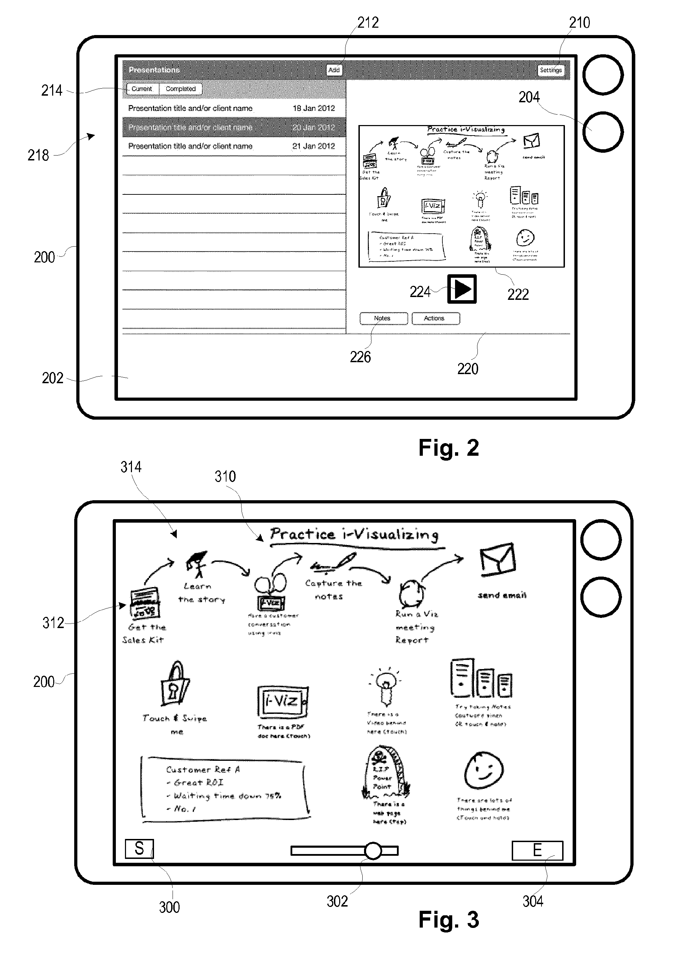

Turning to Figure 2, this shows the exterior of a touchscreen device 200, for example a tablet computer, running the presentation app so as to implement the presentation terminal 100. Interaction with the user is via display screen 202 (DIS in Figure 1) and user input is primarily by touching actions on the screen. Other controls 204 may be provided, as well as audio speakers, for example. In the embodiments to be described, it will primarily be assumed that a touch screen interface is provided in some form or another. Examples of touchscreen devices include portable devices such as tablet computers (even, in principle, pocket-sized devices), and also larger display screens and interactive whiteboard products. The invention is not limited in application to such interfaces. Some form of pointing interface with recognition of one or more gestures is assumed, but this could be by mouse or pen, or other point-and-click device. "Gestures" in this context can range from simple ones such as point, tap, double tap and/or tap and hold, to more elaborate gestures such as swiping, and multi-point gestures such as pinching/reverse pinching and the like. but neither the exact form of sensing or any particular set of gestures is critical. Some adaptations to use a mouse or pen interface will be mentioned briefly, by way of example. The skilled reader can make these and other adaptations according to the interface chosen.

The following touch actions, with mouse equivalents, will be used in the example implementation:
- Tap: A single short tap on an element (click with mouse).
- Double tap: Two short taps in quick succession (double click with mouse).
- Swipe left or right: A touch moving to left or right (no direct mouse equivalent, but right click menu can be used instead).
- Pinch out: A reverse pinching motion with two fingers or finger and thumb (no direct mouse equivalent, but right click menu can be used instead).
- Tap and hold: tap and hold (right click with mouse).
- Drag: touch while moving the touch point.

Figure 2 shows the "home screen" of the app 102, which allows access to all the modules to edit, play a presentation and generate reports, subject to the permissions of the logged-in user account. Elements on this screen with their associated functions are:
- Settings button 210: Displays a Settings window (not shown);
- Add Presentation button 212: Displays a Select Template window (not shown), then opens an Edit Presentation screen with the Presentation Settings window initially shown;
- Current button 214: Filters the list of presentations below it to show only those not marked as completed. Deactivates the Completed button;
- Completed button 216: Filters the list of presentations to show only those marked as completed. Deactivates the Current button;
- Presentations List 218: Displays the title and meeting date of all the user's presentations, as filtered by the Current button and Completed button. Presentations in the list can be selected with a tap;
- Preview Window 220: Displays a preview of the selected presentation. Tap it to open the Play Presentation screen (Figure 3);
- Play button 224: Opens the Play Presentation screen;
- Notes button 226: Opens an All Presentation Notes screen.

Figure 3 illustrates various presentation elements, assembled to form a "storyboard" display in the Play Presentation screen mentioned above. Also on the screen are controls 300 (settings button S) 302 (ghost intensity slider) and 304 (exit presentation button E). The presentation elements in this embodiment comprise for example (i) a textual element 310 providing a title for the storyboard, and (ii) numerous icons 312, 314 etc. that generally each comprise a graphical element having associated with it a line or two of text, if desired. The elements, while appearing to be hand-drawn, are predefined in the template store and/or presentation store, with associated icon bank databases. They are created or imported using the editor module.

In a conventional (manual) whiteboard presentation, all the elements would not visible at the start of a presentation meeting, as they are only drawn (by hand) as the discussion progresses. This behaviour is replicated in the novel system by allowing the icons to have an "inactive" state and an "active" state. Figure 3 therefore shows the storyboard with all elements active, as it would only appear when the presentation meeting has been completed according to plan, in the Play Presentation mode (using module 112). (The same view may be available of course in the Editing module also.)

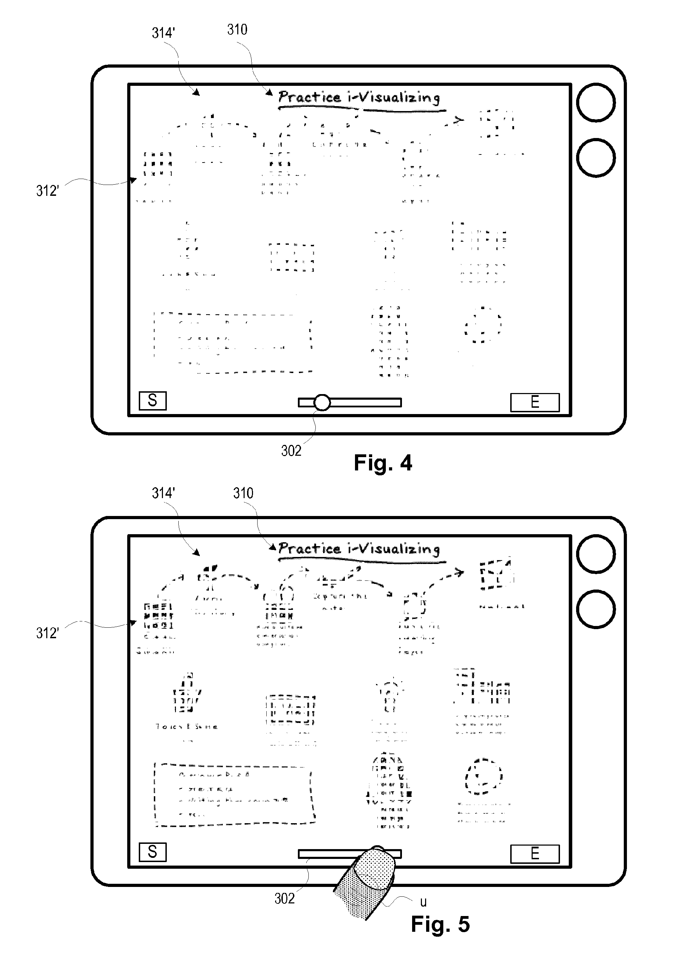

Figure 4 shows the same storyboard in an initial state in which all the icons are in the inactive state. (The title icon 310 has been activated already, to introduce the presentation.) Each inactive icon 312, 314 etc. has its place held by a "ghost" image 312', 314' as shown. The ghost images in this patent illustration are broken versions of the black/white icons. In a practical embodiment, it is likely that the ghost versions will be faint grey copies of the black/white icon, or for example faint colour or outline versions. Also in a practical embodiment it is likely that the icon colours can be selected from a wider palette when designing and editing the storyboard. Strong primary colours might be allowed, for example to mimic the colours of traditional whiteboard markers.

The weight of the ghost image (for example the level of grey or the weight of an outline) should be set so that the presenter can just see the location of the inactive icons and recognise them, without them being a distraction for the viewer. Depending on the type of display screen and the viewing environment, different levels of grey or outline weights might be appropriate. The player module 112 therefore controls the weight of the ghost images, in order to achieve the desired visibility. An automatic control might be envisaged, according to display type, user preference, detected ambient light etc.. In the simple implementation illustrated, the touchscreen control 302 provides a "visibility slider" by which the presenter can easily adjust visibility to suit actual conditions. By providing this manual control of visibility the present can use the heavier weight during editing, rehearsal and set-up phases, moving the visibility to the optimum just for the "live" presentation.

Figure 5 illustrates the player display in a state identical to Figure 4, except that the visibility slider has been moved to increase the weight and visibility of the ghost images 312', 314' for icons 312, 314. The user's finger has been shown schematically at U, having moved the slider to the right hand side by a dragging action.

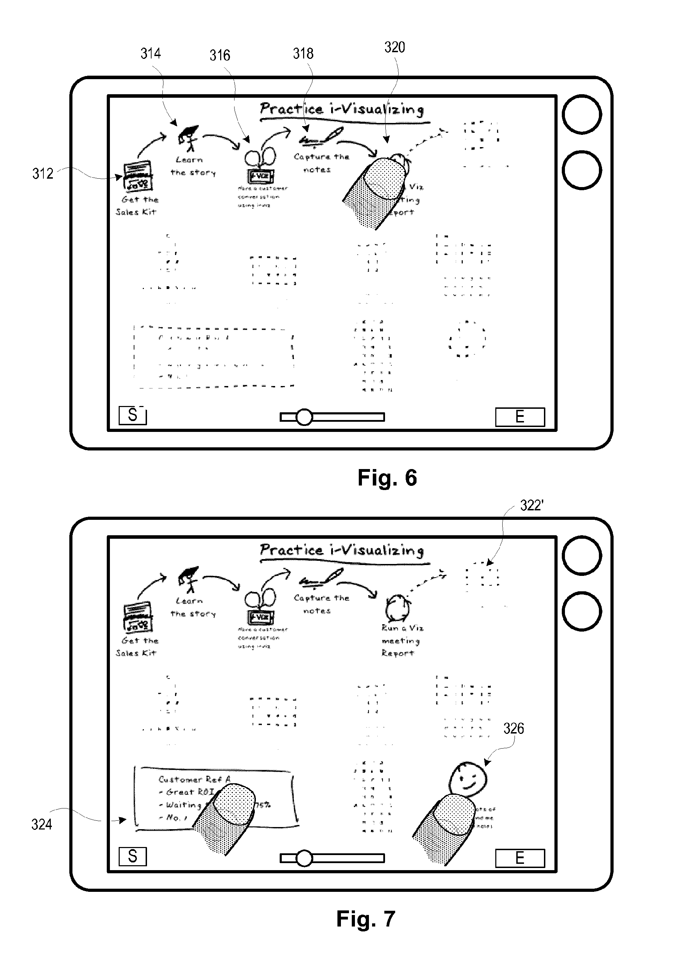

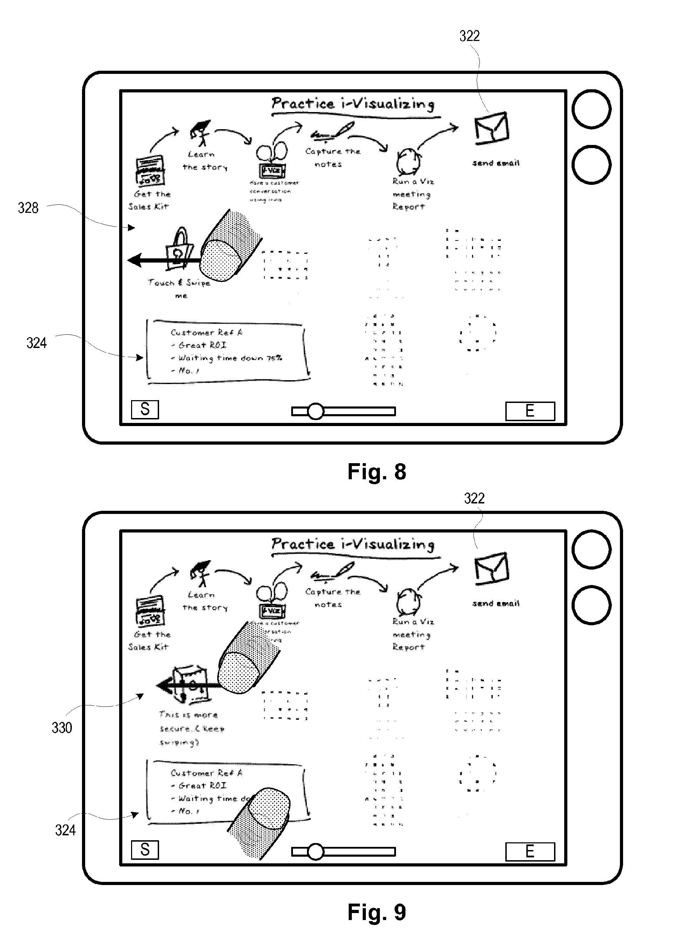

Referring now to Figures 6 onward, different touch actions can be applied to the icons to achieve changes in their appearance or behaviour. In the present example implementation, the following behaviours are provided, which will be illustrated further by examples:
- Inactive element: Tap to make it active and make it fully visible (Figure 6 refers).
- Active element: Swipe left to right to show alternative icons, if the element has alternative versions defined (Figures 8-9). In other words, the swipe action is interpreted as a change command or swap command, applied to the individual icon identified by the swipe location.

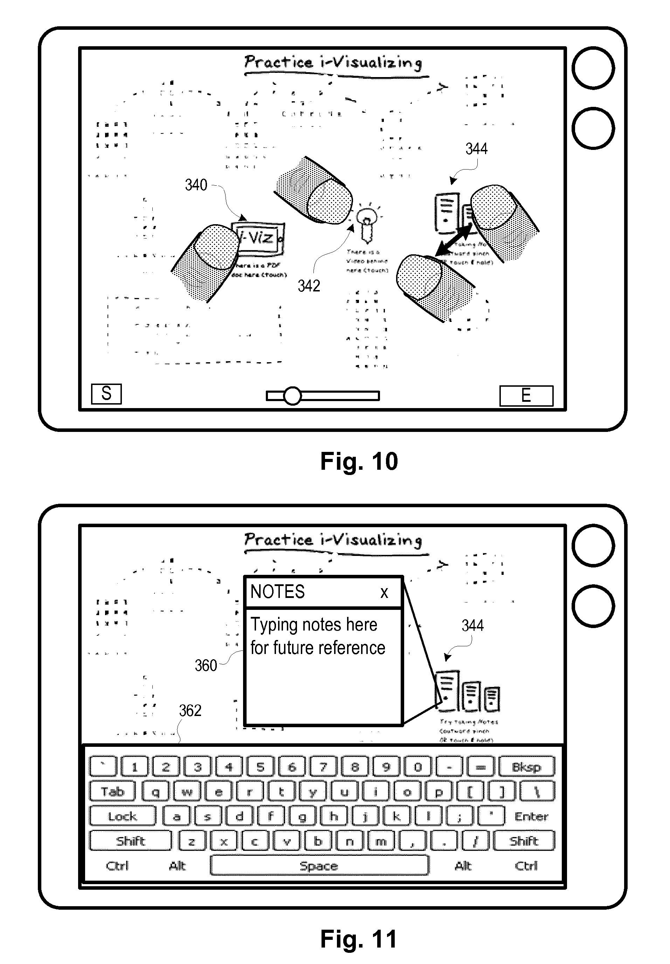

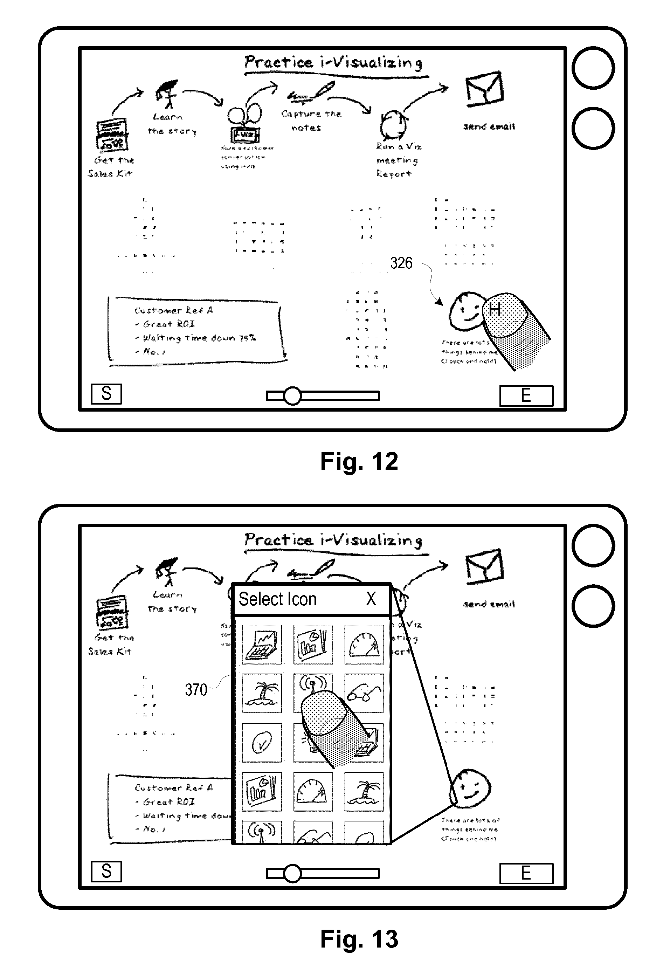

- Active element: Tap to access linked media, if the element has linked media (Figure 10). In other words, the tap action is interpreted as a display or play command, applied to the individual icon identified by the tap location.
- Active element: Pinch out to show the Icon Notes window (Figures 10-11). In other words, the pinch out (reverse pinch) action is interpreted as an annotation command, applied to the individual icon identified by the pinch location.
- Active element: Tap and hold to show the Change Icon window (Figures 12-13). In other words, the tap and hold action is interpreted as a change menu command, applied to the individual icon identified by the tap and hold location.
- Active element: Double-tap an active element to deactivate it again.

In order to implement these behaviours, the player includes functions to identify which element is at or nearest to a touch position received from the user interface UIP. Different solutions are possible for this. One approach is to pre-calculate and store bounding boxes of all elements (and/or their component paths). When a touch is detected, all elements are tested to see which bounding boxes (expanded by a finger radius) contain the touch point. For each element passing that test, find the minimum distance between the touch point and the element's paths. The element with the smallest minimum distance is selected. A second approach involves dividing the screen into a grid of half-finger-size (or slightly smaller). For example on a typical tablet these may be 16 x 16 pixel squares. For each element in a presentation, render it with onto a 1/16th size canvas with a 16-pixel stroke width. For each pixel with 50% or more coverage, record that the element lies under that grid square. This record can be pre-computed for all elements when the presentation is first loaded. When editing a template, it will need to be partially or wholly recomputed after an element is moved or resized. Subsequently, when a touch action is detected by the user input device UIP, the presentation app can rapidly identify which elements are being touched by looking up the element ID from the corresponding grid square.

Where two icons are desired or lie on top of one another, or for example one should appear nested within the other, To assist with editing and programming, the overlapping icons can be defined as lying in different "layers", for example "foreground" and "background". A protocol can then be defined by which the application knows whether the user intends to tap the background icon or the foreground one. For example, where the foreground icon is smaller than the background one, a touch within the area of the foreground icon will be interpreted as referring to the foreground icon, even though it is also within the bounds of the background icon.

In Figure 6 we see how icons can be switched to their active (fully visible) state as the presentation progresses, the presenter uses a touch action to active each icon as it becomes of interest. At the time illustrated, icons 312, 314, 316, 318 have all been activated by tapping them in turn during the discussion, the presenter is tapping a further icon 320 to activate it. In implementation, the ghost images 312', 314' etc. may be pre-generated an stored in parallel with the active versions of the icons. Alternatively, the ghost images may be generated for display based on the icon image and an active/inactive flag.

In the example implementation, presentation elements when activated do not simply appear on the display fully formed, but are rather "drawn", mimicking the use of a pen on a flipchart or whiteboard. Self-drawing icons can be accomplished by animating the drawing of B-splines that make up the paths defining the image, like pen strokes. For text elements, and graphic elements that are not defined by paths, the characters may be drawn as if by pen strokes, or each character may "wipe" into being, giving a passable illusion of handwriting. A difference is that the elements, though they may be hand-drawn originally, do not have to be hand-drawn in real time by the individual giving the presentation. This saves time and improves consistency, while enabling presenters who are not blessed with good drawings skills. There is nothing to prevent non-hand drawn styles of icon or text being used. However, a motivation for the present embodiment is to enable rapid delivery of presentations having the "look and feel" of a whiteboard or flipchart presentation, in a manner that is both consistent and flexible.

An import module is shown in the server application which can capture icons from image files held outside the application. This permits for example uploading a JPEG or PNG image to be used as an icon, or a PPTX (PowerPoint®) file from which to extract icons. If a JPEG or PNG image is uploaded, it will be added to the type as an icon immediately. If a PPTX file is uploaded, paths drawn with the "Scribble", "Freeform", and "Curve" tools in PowerPoint or similar drawing software will be extracted by the import module. Each group of paths will be considered a potential icon, and each single path not in a group will also be considered a potential icon. A page will then be shown listing all the potential icons found; each will have a 'name' field and a checkbox next to it (defaulting to checked) to indicate if it should be imported. A button will add all the checked icons to the type, and the user will be returned to the Edit Icon Type page. The import module can also be provided in the presentation app if it is desired to allow users to add their own icons and other media.

It should be noted that the contents of the illustrated presentation, including in particular the icons and textual matter forming those elements, form no part of the invention and need not be legible or understood for the purposes of the present disclosure. The application of the aid is by no means limited to any particular type of content. Just as conventional slide shows are not limited in the subject matter they can convey, the novel presentation aid can be applied in a sales or marketing task, in training and education. In the embodiments described, the content of the illustrated presentation will be relevant to a sales task. In fact one the object of the illustrated presentation is to sell the novel presentation aid itself, under a name "i-Visualizer".

Referring now to Figure 7, we see the presenter-user exploiting the flexibility that the novel presentation aid provides. After discussing the icon 320 activated in Figure 6, the template designer might imagine that an icon 322 is logically the next in sequence. However, in an interactive discussion such as a sales meeting or tutorial, the listener might begin asking about aspects of the topic that are covered elsewhere in the sequence envisaged at the design stage. While a traditional slide show presentation would permit jumping back-and-forth between slides, this very much breaks the flow and a presenter lacking in confidence will tend to force the listener to sit through the slides in the programmed order. With the novel aid, the presenter can present the icons equally easily in any sequence that the meeting takes. Therefore in this example, rather than tapping the inactive icon 322', the user activates icons 324 and 326.

Figures 8 and 9 illustrate the use of a swipe action to change an icon at one location for another icon at the same location. In Figure 8, the presentation has proceeded already through icons 312 through 322. The icons 324 and 328 have also been activated by a touch. In this meeting, though the storyboard is the same, the icon 326 has not been activated. In the illustrated example, the graphical element of icon 328 represents a padlock and the accompanying discussion might concern for example security aspects of the presentation server, which are of interest to a potential corporate user. By swiping, as shown in Figure 9, the user can swap the padlock icon for an icon 330 showing an image of a safe, indicating a higher or different degree of security. These different icons might be just different images illustrating the same security functionality, with the presenter choosing a suitable image according to taste. Alternatively the different icons might actually represent different security options within the product being described. The appropriate level of security can be selected provisionally in advance of the meeting (using the editor 106), but can be changed during the live meeting as discussion with the customer reveals their concerns about risk, ease of use and so forth. Thus the presentation is not predetermined in the same way as a deck of slides normally will be, and the presenter can be much more responsive to the concerns of other parties in the meeting, and can be seen to be much more responsive.

Similarly, in the illustrated example, the icon 324 contains textual information such as a case study or worked example. By swiping across it, the user can change the icon to show a succession of different case studies, all at the same icon position. The presenter can swipe quickly until finding the one most appropriate to the listener's question or situation, or can pause and speak about each one, if they are all relevant. The presenter can choose one which he/she thinks most likely to be appropriate for this individual listener, while being able to swap quickly to another one if their provisional choice turns out to be less appropriate. This is all achieved without moving from the single storyboard display.

Figure 10 illustrates some further features and behaviours around the icons in this implementation. Icons 340 and 342 have been activated. As mentioned above, a tap on an icon that is already active is used to launch a media file or the like that has been associated with the icon. This association may have been created in the template design phase, or during editing of the individual presentation. Icon 340 has (for example) a PDF format document that will open on the display when the icon is tapped. Icon 342 has a video file associated with it. The video file may be stored locally within the media bank of the presentation app, or alongside the presentation app, or at a remote host. As is well known, videos can be hosted in a number of formats and on sites such as YouTube™ or Vimeo™. The icon definition in that case simply stores a URL where the video can be accessed via the network interface NIF, and any required access credentials.

The types of media that can be linked and accessed through an icon include not only documents and video, but also sound files, website URLs, and other storyboards. Thus, one of the icons might launch another storyboard so that the presenter can "drill down" as far as required into the detail of any sub-topic within the discussion. The drilling down into sub-topics does not need to follow any set sequence, and can be tailored in the live meeting, according to the interests and needs of the listener.

An icon need not have only one media item linked to it, but can have a selection, or an entire library. In that case, tapping on the icon will launch a selection menu, rather than launching any one media item directly.

Another important feature of the presentation aid is the ability to take notes during the live meeting, and have them captured within the presentation data (Figure 1) either as a note for the presentation as a whole or as a note under a specific icon. Figure 10 illustrates the "pinch out" gesture being made on icon 344. This triggers the opening of a "notes" window 360 for that icon, as seen in Figure 11. In this illustration, the notes window opens with a virtual keyboard 362 by which some text can be entered. The resulting note can be closed and gets saved in the notes records associated with the icon and the presentation, in the presentation store of the app 104. In addition to typed notes, options can be provided for audio notes, hand written notes or even videos or photographs to be attached to an icon.

Figures 12 and 13 illustrate editing of the presentation to substitute one icon from another. As mentioned already, a selection of alternative icons can be accessed if desired, by swiping across the icon. As an alternative, or as a way of accessing a greater variety of icons than can be swiped conveniently, an icon menu can be called up by a tap and hold action. Figure 12 shows the finger of the user performing the tap and hold action on icon 326. Figure 13 shows the icon selection window 370 opening with a large selection of icons to pick from. This simple editing facility may be provided in the presentation app player function, to be performed live if necessary during a presentation meeting. Alternatively it may be reserved for the editor module, to be used only before the meeting. Depending on the system configuration and user privileges, more powerful editing functions may be provided, either in the player module, the presentation app editor module, and/or the server app editor module.

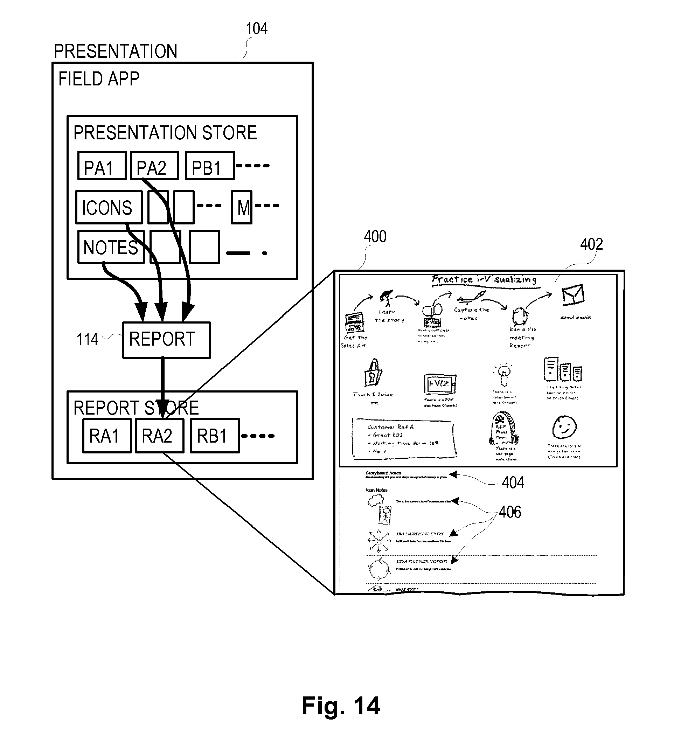

Referring again to the "home screen" of the presentation app 104, Figure 14 illustrates the function of the report generating module 114. As will be appreciated from the above description, at the conclusion of the presentation meeting, the user has a customised presentation, and optionally a number of notes. For his/her own purposes and also to provide a record of the meeting and agreed actions, the report module collects these presentation elements and notes into a formatted report 400. The report 400 may be for example a PDF document or one or more pages. As seen in the illustrated example, the report begins with an image 402 of the storyboard in the condition it was at conclusion of the meeting. Next there is printed any note 404 that were attached to the presentation as a whole (for example one might here record the date and place of the meeting, and who was present, as well as any questions or actions). Then there are printed individual icons 406 with notes that were created against them during the meeting.

The order of reporting these icons may be determined according to the sequence they appeared in the meeting. In the present implementation, however, the order of the icons in the report is pre-defined as part of the template design, so that the reports, unlike the interactive meetings, will have a logical and consistent structure. In a case where multiple versions of the same icon may have been displayed and annotated in the course of the meeting, it is a matter of design choice whether these are all reproduced in the report, or only the one which was finally displayed at the close of the meeting.

Not illustrated in detail are the various screens of the editor module, including the template editor that is available to users with suitable privileges, at least in the server app 124. In the example implementation, there may be provided for example the following screens for editing. These editing screens employ the same touchscreen interface as the player module, but this is of course a matter of design choice.

A "Templates" screen allows the user to manage templates accessible to the user, i.e. those in the user's templates group. The look of the screen can be very similar to the Presentations screen shown in Figure 2, except that templates are listed at the left hand side, instead of individual presentations. The Templates List displays the title all the templates accessible to the user. Templates in the list can be selected with a tap. An Add Template button creates a new template, and opens an Edit Template screen with the Template Settings window initially shown. A Done button returns to the Presentations screen. A Published button filters the list of presentation templates to show only those marked as published. An Unpublished button conversely filters the list of presentations to show only those not marked as published. A Preview Window displays a preview of the selected template. Tapping it will open an Edit Template screen. An Edit button provides another way to open the Edit Template screen. A Clone button clones the selected template, and opens the Edit Template screen with the Template Settings window initially shown. A Delete button displays a confirmation window, and if confirmed deletes the selected template.

The "Edit Template" screen allows the user to create and edit presentation templates, in particular by adding and positioning presentation elements (icons, text items). A Done button is provided to close the screen and return to the Templates screen. A Template Settings button opens a Template Settings window. A Preview button opens the Play Presentation screen with an example presentation made from the template. A Layer Select button allows the user to choose to edit the Foreground layer, or the Background layer. An Add Element button displays an Add Element window. The Add Element window contains an Icon Type Select field, and displays a scrolling list of icons of the selected type. The user can tap or drag an icon to place it into the template. Tapping outside the window will close it. In addition to adding icons with graphical and (optional) text elements, the Add Element window also offers the facility to add text only element such as the title element 310 shown in Figures3, 4 etc..

An "Edit Presentations" screen operates almost identically to the Edit Template screen. It edits a single presentation instead of a template. In addition, any permission restrictions set in a template will limit the actions the user can take on this screen; any fields restricted by template permissions will not be shown. A Done button allows the user to close the screen and return to the Presentations screen. A Presentation Settings button opens a Presentation Settings window. A Preview button opens the Play Presentation screen with the presentation. A Layer Select button allows to edit the Foreground layer, or the Background layer. An Add Element button displays an Add Element window. The Add Element window contains an Icon Type Select field, and displays a scrolling list of icons of the selected type. The user can tap or drag an icon to place it into the template. Tapping outside the Add Element window closes it. The Presentation Settings window is shown while editing a presentation when the user taps the Presentation Settings button. Settings can be adjusted such as the title of the presentation, the date of the meeting or the like. Tapping outside the window will close it.

Within these editing screens, the position and properties of any presentation element can be edited (with suitable permission) by touch actions. Tap to select the element or element caption. Drag to move the element; this will also select the element. Element handles can be dragged to resize the element. Tapping an area away from the element will deselect the selected element. When an element is selected, an Edit Element panel is displayed automatically on another part of the screen, except when the selected element or its caption is being moved or resized. Tapping the selected icon will enter an Icon Select function, to display a window with an Icon Type Select and a scrolling list of icons, similar to but slightly smaller than the Add Element window. Selecting an icon changes the icon used for the selected element; there is the option to select "no icon".

In the Edit Element panel, a Colour Select button can be tapped to display a window with a scrolling list of colours. Selecting a colour changes the colour of the selected element. An Alternative Icon Select button can be tapped to display a window as for the Icon Select, but multiple icons can be selected and deselected. A Caption field button can be tapped to show the keyboard and edit the caption of the selected element. The caption can have multiple lines. A Font Size Select button allows the font size for the caption to be selected, while an Underline Select button allows a hand-drawn-like line beneath the caption to be added or removed. A Links field can be tapped to show the Linked Media window. If the selected element has more than one media item linked, a field will be shown for each, with a final field to add another linked media item. If the selected element has no media items linked, a single field labelled "No link" will be shown. Permissions fields are provided to allow the user to set user permissions for the selected element. A Delete button can be tap to delete the selected element.

Within the templates and icon bank of the present implementation, categories can be used to group icons by their functions. For example, within a sales presentation categories may be "business objectives", "barriers", "solutions". Each category can have multiple icons, of which all are not on the presentation main screen, but available to the presentation editor to swap for another icon. Template categories also control the colour of the icons. Users can create template categories on the fly, when adding an icon, or can maintain them separately (for example for setting the list of alternative icons for swapping during a presentation). Template category definitions may for example contain: Category name; Default icon colour (selection from a palette of colours); and within the category a list of icons. The list of icons may contain for each icon fields such as: Icon image; Icon label; Is a favourite icon (yes / no)?

As mentioned already, the novel presentation aid allows a more flexible and interactive presentation style to be deployed in meeting situations, without losing consistency of the message and delivery style. The implementation described above and illustrated in the drawings is just one possible implementation (with variations as described). The examples described are purely illustrative and the skilled reader will appreciate that many further modifications and variations are possible within the spirit and scope of the invention described herein.

## Claims

1. An electronic presentation aid comprising a processing device programmed:
- to receive presentation data defining the appearance of a plurality of presentation elements, the presentation data further defining positions of said elements such that they may be displayed in a presentation layout on a display screen;
- in a presentation mode to cause display of said plurality of presentation elements in the presentation layout, each element being displayed in either a full visibility state or a reduced visibility state; and
- in said presentation mode to receive user input signals from time to time indicating individual presentation elements within said presentation layout and in response to the user input signals to change the indicated element from the reduced visibility state to the full visibility state, whereby the plurality of elements may be selected and made fully visible in a sequence determined by user during a presentation.

2. A presentation aid as claimed in claim 1 wherein said processing device is further programmed in said presentation mode to:
- receive in said presentation data information associating one or more alternative presentation elements with one or more of said presentation elements;
- receive a user input signal indicating one of said elements and a change command;
- in response to said change command swapping the element for the alternative element at the same location in the layout.

3. A presentation aid as claimed in claim 1 or 2 wherein said processing device is further programmed in said presentation mode to:
- receive second presentation data defining the appearance of a second plurality of presentation elements, the second presentation data further defining positions of said elements such that they may be displayed in a second presentation layout on the display screen;
- receive in said presentation data information associating said second presentation data with a specific one of said presentation elements;
- receive a user input signal indicating one of said elements and a display or play command;
- in response to said display or play command accessing and presenting to the user the second presentation elements in the second layout, in the same manner as defined in claim 1.

4. A presentation aid as claimed in claim 1, 2 or 3 wherein said processing device is further programmed in said presentation mode to:
- receive in said presentation data information associating a plurality of alternative presentation elements with one or more of said presentation elements;
- receive a user input signal indicating one of said elements and a change menu command;
- in response to said change menu command displaying the plurality of alternative elements in a menu;
- in response to a user input signal selecting one of the alternative elements from the menu, displaying the selected element in place of the existing one at the same location in the layout.

5. A presentation aid as claimed in claim 1, 2, 3 or 4 wherein said processing device is further programmed in said presentation mode to:
- receive in said presentation data information associating one or more media clips or documents with one or more of said presentation elements;
- receive a user input signal indicating one of said elements and a media play command;
- in response to said media play command playing said media clip or displaying said document, as the case may be.

6. A presentation aid as claimed in any preceding claim wherein said processing device is further programmed in said presentation mode to:
- receive a user input signal indicating one of said elements and an annotation command;
- in response to said annotation command taking from the user annotation data associated with the indicated element;
- storing the annotation data in association with the presentation data.

7. A presentation aid as claimed in claim 6 wherein said processing device or another processing device is further programmed in a reporting mode to:
- receive presentation data relating to a delivered presentation and producing a report including the annotation data taken from the user.

8. A presentation aid as claimed in any preceding claim further comprising a user input device for generating said user input signals.

9. A presentation aid as claimed in any preceding claim wherein said a user input device has the function of a touchscreen or interactive whiteboard.

10. A presentation aid as claimed in any preceding claim wherein in said reduced visibility state a presentation element has the same appearance as in the full visibility state but reduced in one or more of contrast, saturation, line weight, definition.

11. A presentation aid as claimed in any preceding claim wherein said processing device or another processing device is further programmed in a presentation editing mode to:
- receive a user input signal indicating one of said elements and an edit command;
- edit the presentation data to modify the appearance and/or position of said element in the presentation when displayed.

12. A presentation aid as claimed in claim 10 wherein said processing device or other processing device is further programmed in said presentation editing mode to:
- to receive template data defining the appearance of a plurality of presentation elements, the presentation data further defining positions of said elements such that they may be displayed in a presentation layout on a display screen;
- in accordance with said edit commands edit the template data to modify the appearance and/or position of said element in the presentation when displayed; and
- to save the modified template data as presentation data for use in the presentation mode of claim 1.

13. An electronic presentation aid comprising a touchscreen display and processor programmed to present one or more graphical elements in a presentation layout on a display screen, each element being displayed in either a full visibility state or a reduced visibility state, the processor being responsive to a user's touch action on a reduced visibility element to turn it automatically to the full visibility state.

14. An electronic presentation aid as claimed in claim 13 wherein said processor is programmed to present a plurality of graphical elements in a presentation layout on a display screen, at least a majority of said elements being initially in said reduced visibility state, the processor being responsive to a user's touch actions to turn those elements to the full visibility state in accordance with a sequence in which they are touched by the user.

15. An electronic presentation aid as claimed in claim 13 or 14 wherein said processor is programmed to swap one of said elements for a predetermined alternative element in response to a further touch action performed on that element by the user.

16. A computer program product comprising machine readable instructions for causing a processing device to implement the presentation aid of any preceding claim.
